# EUROPÄISCHE PATENTSCHRIFT

(11) **EP 3 357 381 B1**
(45) Veröffentlichungstag und Bekanntmachung des Hinweises auf die Patenterteilung: **25.09.2019**
(21) Anmeldenummer: 17154468.7
(22) Anmeldetag: 02.02.2017
(51) Int. Cl.: A47J 43/07, B01F 7/16, F16B 47/00

(54) **RÜHRSCHÜSSEL MIT SAUGNAPF**
STIRRING VESSEL WITH SUCTION CUP
BOL MÉLANGEUR COMPRENANT UNE VENTOUSE

(43) Veröffentlichungstag der Anmeldung: 08.08.2018
(73) Patentinhaber: keeeper GmbH, 32351 Stemwede (DE)
(72) Erfinder: DUMLER, Alex, 20359 Hamburg (DE); WITT, Florian M., 21465 Wentorf (DE); KÖNINGSBERGER, Johanna, 22765 Hamburg (DE); HECKER, Matthias, 22609 Hamburg (DE); PLATE, Torsten, 22089 Hamburg (DE); FERRIER, Andrew, Ottawa, Ontario, K2K 2N1 (CA)
(74) Vertreter: Weeg, Thomas

(56) Entgegenhaltungen:
- GB-A- 2 470 898
- US-A1- 2008 265 108
- Anonymous: "Amazon.com : Baby Bowls with Suction, Vacuum Seal with Quick Tab Release and Snap on Lids, Spill Proof, 3 Compartment Food Storage Design From BEEBOOBOPBOO : Baby", , 22. Januar 2017 (2017-01-22), Seiten 3-3, XP055392161, Gefunden im Internet: URL:https://www.amazon.com/Suction-Vacuum- Release-Compartment-BEEBOOBOPBOO/dp/B01LP7 5PL0/ref=lp_15783148011_1_1_a_it?srs=15783 148011&ie=UTF8&qid=1500459248&sr=8-1&th=1 [gefunden am 2017-07-19] & Anonymous ET AL: "Amazon.com: Customer reviews: Baby Bowls with Suction,Vacuum Seal with Quick Tab Release and Snap on Lids, Spill Proof, 3 Compartment Food Storage Design From BEEBOOBOPBOO", , 22. Januar 2017 (2017-01-22), Seiten 2-2, XP055392159, Amazon Online shop/reviews Gefunden im Internet: URL:https://www.amazon.com/Suction-Release -Compartment-Storage-BEEBOOBOPBOO/product- reviews/B01LP75PL0/ref=cm_cr_arp_d_show_al l?ie=UTF8&reviewerT

## Beschreibung

Die vorliegende Erfindung bezieht sich auf eine Rührschüssel nach dem Oberbegriff des Anspruchs 1.

Eine Rührschüssel ist beispielsweise aus der Schrift DE 20 2009 009 198 U1 bekannt. Um die Rührschüssel rutschsicherer auf einer Arbeitsfläche aufstellen zu können, wird vorgeschlagen, die bodenseitig ringförmig umlaufende Dichtung an ihrem inneren und äußeren unteren Rand mit jeweils einer Lippe zu versehen, die zwischen sich einen Hohlraum begrenzen, in dem auf einer glatten Aufstellfläche ein Unterdruck erzeugt werden kann. Über den Unterdruck im Hohlraum wird die Rührschüssel auf die Aufstellfläche gedrückt und kann nicht mehr ganz so leicht beim Rühren ungewollt verschoben werden.

Da der Hohlraum nur ein geringes Volumen aufweist, ist der damit erzeugbare Unterdruck nur vergleichsweise gering. Zudem weisen die Lippen nur eine geringe Materialstärke auf, so dass sie schon bei geringen Beschädigungen versagen und bei ebenfalls nur geringen Unebenheiten in der Aufstellfläche den Hohlraum nicht mehr zuverlässig abdichten.

Es ist weiter eine gattungsgemäße Schale bekannt, die als Essgeschirr für Babys verwendbar ist. An der Unterseite der Schale befindet sich ein Saugnapf, mit dem die Schale fest mit der Aufstellfläche verbunden werden kann, so dass ein Baby das Essen leichter aus der Schale löffeln kann, ohne dabei die Schale festhalten zu müssen oder die Schale umzuwerfen. Der aus einem Silikon hergestellte Saugnapf kann mit einem Vakuum auf der Aufstellfläche haftend gehalten werden. Wenn Luft in dem Hohlraum unter den Saugnapf gelassen wird, hebt sich das Vakuum auf, und die Schale ist wieder frei beweglich. Der Saugnapf ist allerdings hinderlich, wenn die Schale nicht an einer Aufstellfläche anhaften soll, beispielsweise, wenn sie frei beweglich sein soll oder wenn sie gelagert wird.

Es ist die Aufgabe der vorliegenden Erfindung, eine Rührschüssel mit einem Saugnapf zu schaffen, bei der der Saugnapf nicht hinderlich ist, wenn die Schüssel bewegt oder gelagert werden soll..

Die Aufgabe wird für eine gattungsgemäße Rührschüssel mit den kennzeichnenden Merkmalen des Anspruchs 1 gelöst.

Durch die Kombination der Unterseite der Rührschüssel mit dem Dichtring zu einem Saugnapf kann ein viel größerer Hohlraum im Saugnapf umgrenzt werden, als das im vorbekannten Stand der Technik möglich ist. Über den größeren Hohlraum können größere Haltekräfte erzeugt werden. Durch Herunterdrücken der Rührschüssel schwenken die in radialer Richtung äußeren Bereiche der beweglichen Lippe nach oben, während sich dabei der vom Dichtring zusammen mit der Unterseite der Rührschüssel umgrenzte Hohlraum verkleinert und überschüssige Luft daraus zwischen der beweglichen Lippe und der Aufstellfläche nach außen hin entweicht, bis sich zwischen dem äußeren Umgebungsdruck und dem Luftdruck im gegenüber der Normalstellung verkleinerten Hohlraum annähernd ein gleich großer Druckwert eingestellt hat. Der Bereich der Unterseite der beweglichen Lippe, der abschnittsweise eine Aufstandsfläche bildet, liegt dabei so auf der Oberfläche einer Aufstellfläche auf, dass Luft von außen nicht in den Hohlraum eindringt und die bewegliche Lippe den Hohlraum nach außen hin gegen sonst möglicherweise in den Hohlraum eindringendes atmosphärisches Gas abdichtet. Dafür ist die Oberfläche der Unterseite der beweglichen Lippe entsprechend glatt ausgestaltet, und das elastische Material weist eine ausreichende Weichheit auf, um sich an die Struktur der Oberfläche der Aufstellfläche anpassen zu können.

Je nachdem, wie weit die Rührschüssel auf die Aufstellfläche herunter gedrückt wird, verkleinert sich der Hohlraum entsprechend mehr oder weniger, und es wird dabei auch eine größere oder eine kleinere Menge von Luft aus dem Hohlraum evakuiert. Je nach Luftmenge, die aus dem Hohlraum ausgeströmt ist, ergibt sich ein kleinerer oder größerer Anpressdruck, mit dem die Rührschüssel auf die Aufstellfläche gedrückt worden ist. Der Druck, mit dem die Rührschüssel über den Saugnapf auf die Aufstellfläche gedrückt wird, ist also davon abhängig, wie weit die Rührschüssel zuvor auf die Abstellfläche gedrückt worden ist. Je nach Länge der Hubbewegung kann die Rührschüssel also mit einem größeren oder kleineren Anpressdruck auf eine gewünschte Haltekraft eingestellt werden, mit der die Rührschüssel auf der Aufstellfläche gehalten ist. Die bewegliche Lippe ermöglicht es also, die Haltekraft zu variieren, mit der die Rührschüssel auf der Aufstellfläche gehalten ist.

Das elastische Material der beweglichen Lippe baut bei seiner lastabhängigen Verschwenkbewegung durch die dabei auftretende Materialverformung Rückstellkräfte auf. Wird die Rührschüssel danach wieder ganz oder teilweise entlastet, bewegen die im elastischen Material aufgebauten Rückstellkräfte die bewegliche Lippe zumindest annähernd wieder in ihre Ausgangsposition zurück. Da sich der Hohlraum dabei wieder vergrößert, durch eine luftdichte Anlage der Unterseite der Lippe an der Aufstellfläche aber keine neue Luft in den Hohlraum einströmen kann, bildet sich dabei im Hohlraum ein Unterdruck. Durch den auf die beschriebene Weise hergestellten Unterdruck im Hohlraum wird der Rührbehälter vom äußeren Umgebungsdruck auf die Aufstellfläche gedrückt, wodurch sich dessen Standsicherheit und - festigkeit erheblich vergrößert.

Durch die Verwendung eines Dichtrings, der sich zumindest teilweise in radialer Richtung nach außen erstreckt, kann ein größerer Teil der Aufstellfläche mit dem Saugnapf abgedeckt werden. Dadurch vergrößert sich das Volumen des Hohlraums. Durch eine Schrägstellung der beweglichen Lippe in der Ausgangsstellung im Verhältnis zur Ebene der Aufstellfläche können die in radialer Richtung äußeren Bereiche der beweglichen Lippe bei einer einwirkenden Last leicht nach oben schwenken. Es muss deshalb keine hohe Kraft aufgewendet werden, um die Rührschüssel auf die Aufstellfläche aufzudrücken und dabei den Hohlraum von darin befindlichem Gas zu evakuieren.

Der Dichtring ist aus einer Gebrauchsstellung in eine Nichtgebrauchsstellung verlagerbar. Die Rührschüssel wird von einem Verwender manchmal gerne auch schräg gehalten, oder es ist erwünscht, dass der Verwender die Rührschüssel leicht auf der Aufstellfläche hin und her schieben kann. In einem solchen Fall kann die bewegliche Lippe hinderlich sein, und es ist dann vorteilhaft, wenn die bewegliche Lippe aus ihrer normalen Gebrauchsstellung in eine Nichtgebrauchsstellung verlagert werden kann. In der Nichtgebrauchsstellung hat die bewegliche Lippe keinen Kontakt zur Aufstellfläche, wenn die Rührschüssel auf die Aufstellfläche gestellt wird. Vorteilhaft wird der Dichtring durch die Eigenspannung des elastischen Materials in der Nichtgebrauchsstellung gehalten. Dies ist beispielsweise möglich, indem das freie Ende der beweglichen Lippe über einen Totpunkt hinweg nach oben verschwenkt wird. Im Bereich des Totpunktes erfährt das elastische Material der beweglichen Lippe seine maximale Dehnung. Nach der Überwindung des Totpunktes schnappt die bewegliche Lippe von den im elastischen Material gespeicherten Rückstellkräften nach oben, weil sich das elastische Material dabei wieder entspannt. Wenn sich die bewegliche Lippe in ihrer Nichtgebrauchsstellung befindet, kann die Rührschüssel mit dem Stützelement auf der Aufstellfläche stehen.

Der Dichtring liegt in der Nichtgebrauchsstellung an der nach außen weisenden Oberfläche der Rührschüssel flächig an. In dieser Lage beansprucht der Dichtring nur einen sehr geringen Raum im Umgebungsbereich der Rührschüssel und behindert nicht die leichte Handhabung der Rührschüssel. Die Rührschüssel ist im Bereich des Dichtrings wegen seines elastischen Materials auch rutschsicherer zu erfassen.

Nach einer Ausgestaltung der Erfindung ist die bewegliche Lippe am äußeren Rand der Unterseite mit der Rührschüssel verbunden. Wenn der Innenrandbereich der beweglichen Lippe möglichst weit außen platziert ist, kann der Hohlraum entsprechend groß ausfallen. Indem die Unterseite der Rührschüssel möglichst breitflächig abgestützt wird, ergibt sich auch ein sehr kippsicherer Stand der Rührschüssel auf der Aufstellfläche.

Nach einer Ausgestaltung der Erfindung ist die bewegliche Lippe als Flachdichtring ausgebildet. Als Flachdichtring kann sich die bewegliche Lippe leicht und gleichmäßig verformen, wenn auf sie eine Andruckkraft ausgeübt wird. Sie verfügt gleichwohl über eine ausreichende Festigkeit, um die Rührschüssel auch dann in einer Aufstellposition zu halten, wenn im Hohlraum ein Unterdruck eingestellt ist.

Nach einer Ausgestaltung der Erfindung ist an die bewegliche Lippe eine Zuglasche angeformt. Die Zuglasche kann leicht ergriffen und von der Aufstellfläche abgehoben werden, um die bewegliche Lippe in diesem Bereich so weit anzuheben, dass Luft von außen in den Hohlraum strömen kann, so dass dort der Unterdruckzustand aufgehoben ist. Bevorzugt steht die Zuglasche seitlich und/oder nach oben über die umgebende Außenkontur der beweglichen Lippe hervor. Damit befindet sich die Zuglasche nicht unmittelbar in dem Bereich, in dem der äußere atmosphärische Druck die bewegliche Lippe auf die Oberfläche der Aufstellfläche aufpresst.

Nach einer Ausgestaltung der Erfindung ist an der Unterseite der Rührschüssel ein Stützelement ausgebildet, das eine maximale Absenkhöhe der Rührschüssel im Verhältnis zur beweglichen Lippe definiert. In einer bevorzugten Ausführung ist das Stützelement innerhalb des Hohlraums angeordnet. Es erstreckt sich in vertikaler Richtung über einen Teil der Höhe des Hohlraums. Das Stützelement kann aus mehreren einzelnen voneinander getrennten Stützfüßen oder als ein umlaufender Ring ausgebildet sein, der über die benachbarte Oberfläche der Unterseite der Rührschüssel hervorsteht. Das Stützelement dient dem Zweck, sicherzustellen, dass die bewegliche Lippe nicht so weit überdehnt wird, dass sie den Hohlraum nach außen hin nicht mehr zuverlässig abzudichten vermag. Das Stützelement begrenzt außerdem den Hubweg der beweglichen Lippe und damit das Luftvolumen, das beim Andrücken der Rührschüssel auf die Aufstellfläche aus dem Hohlraum entweichen kann. Dadurch wird auch die sich aus dem Unterdruck im Hohlraum resultierende Haltekraft des Saugnapfes auf einen sinnvollen Wert begrenzt.

Es wird ausdrücklich darauf hingewiesen, dass jede der vorstehend beschriebenen Ausgestaltungen der Erfindung jeweils für sich, aber auch in einer beliebigen Kombination untereinander mit dem Gegenstand des Hauptanspruches kombinier-bar ist, soweit dem keine technisch zwingenden Hindernisse entgegenstehen.

Weitere Abwandlungen und Ausgestaltungen der Erfindung lassen sich der nachfolgenden gegenständlichen Beschreibung und den Zeichnungen entnehmen.

Die Erfindung soll nun anhand eines Ausführungsbeispiels näher beschrieben werden. Es zeigen:
- Fig. 1:: eine Ansicht auf eine Rührschüssel mit Dichtring von schräg unten,
- Fig. 2:: eine Ansicht auf die in Fig. 1 gezeigte Rührschüssel auf einer Aufstellfläche,
- Fig. 3:: eine Ansicht auf die Rührschüssel mit dem Dichtring in einer Nichtgebrauchsstellung,
- Fig. 4:: eine Schnittansicht durch eine Rührschüssel mit dem Dichtring in Gebrauchsstellung, und
- Fig. 5:: die in Fig. 4 gezeigte Rührschüssel mit dem Dichtring in einer Nichtgebrauchsstellung.

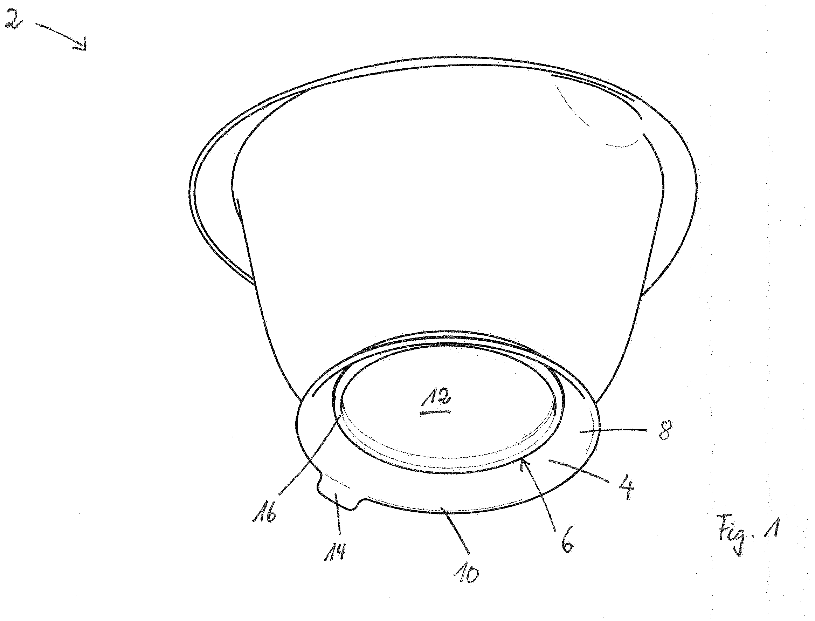

In Fig. 1 ist eine Rührschüssel 2 aus einer Ansicht von schräg unten gezeigt. Aus dieser Ansicht ist der Dichtring 4 gut erkennbar, der mit seinem inneren Randbereich luftdicht mit der Rührschüssel 2 verbunden ist. Der Dichtring 4 verfügt über eine bewegliche Lippe 8, die sich in radialer Richtung vom Randbereich 6 aus nach außen erstreckt. In der in Fig. 1 gezeigten entspannten Lage ist die im Ausführungsbeispiel als Flachdichtring ausgebildete Lippe nach schräg unten ausgerichtet.

Die bewegliche Lippe verfügt auf ihrer Unterseite über eine umlaufende Aufstandsfläche 10, die mit dem äußeren Rand der beweglichen Lippe 8 beginnt und sich je nach Last, die auf die bewegliche Lippe 8 einwirkt, nach innen hin vergrößern kann. Die Aufstandsfläche 10 ist im Ausführungsbeispiel eine Ringfläche.

Der Randbereich 6 des Dichtrings 4 ist im Ausführungsbeispiel am äußeren Rand der Unterseite 12 der Rührschüssel 2 angeordnet. Dadurch hat die Unterseite 12 einen großen Radius und überdeckt eine vergleichsweise große Fläche. Da sich der Dichtring 4 noch über die Fläche der Unterseite 12 der Rührschüssel 2 hinaus in seitlicher Richtung erstreckt, wird die Rührschüssel über den Dichtring 4 großflächig abgestützt.

Wenn die Rührschüssel 2 auf eine Aufstellfläche aufgesetzt wird, steht diese zunächst mit den äußeren Kanten der Aufstandsfläche 10 auf der Aufstellfläche 18 auf. Wenn die Rührschüssel 2 zunehmend belastet wird, biegt sich die bewegliche Lippe 8 nach oben hin auf. Dabei vergrößert sich die Aufstandsfläche 10 der beweglichen Lippe 8 nach innen hin, bis die bewegliche Lippe 8 über ihre gesamte radiale Erstreckung hin annähernd waagerecht auf der Aufstellfläche 18 aufliegt. Da die Lippe 8 in einer waagerechten Stellung nicht mehr auf optimale Weise Rückstellkräfte freigeben kann, weil der Dichtring 4 mit seinem elastischen Material annähernd eine Totpunktstellung erreicht hat, ist es vorteilhaft, das Maß, um das die Rührschüssel 2 gegenüber der beweglichen Lippe 8 nach unten hin abgesenkt werden kann, zu begrenzen. Zu diesem Zweck befindet sich auf der Unterseite 12 der Rührschüssel 2 ein Stützelement 16, das im Ausführungsbeispiel als ein ringförmiger Steg ausgebildet ist. Das Stützelement 16 definiert eine maximale Absenkhöhe der Rührschüssel 2 im Verhältnis zur beweglichen Lippe 8. Beim Absenken der Rührschüssel 2 wird Luft aus dem Hohlraum 20 gedrückt. Da wegen der beweglichen Lippe 8 und deren luftdichter Anhaftung auf der Aufstellfläche 18 der Hohlraum 20 nicht mit frischer Luft befüllt werden kann, wenn sich die Rührschüssel 2 nach Wegfall der Andrückkraft wieder leicht anhebt, entsteht im Hohlraum 20 ein Unterdruck.

An der beweglichen Lippe 8 ist eine Zuglasche 14 angeformt, mit der die bewegliche Lippe angehoben werden kann. Das Anheben und Abheben der beweglichen Lippe 8 von der Aufstellfläche 18 ermöglicht es der Außenluft, in den Hohlraum 20 einzuströmen, in dem sich nach dem Absenken der Rührschüssel 2 in Richtung der Aufstellfläche 18 ein Unterdruck gebildet hat, der durch den Dichtring 4 und dessen Anlage auf der Aufstellfläche 18 aufrechterhalten geblieben ist. Mit der Zuglasche 14 kann die bewegliche Lippe 8 leicht erfasst und angehoben werden.

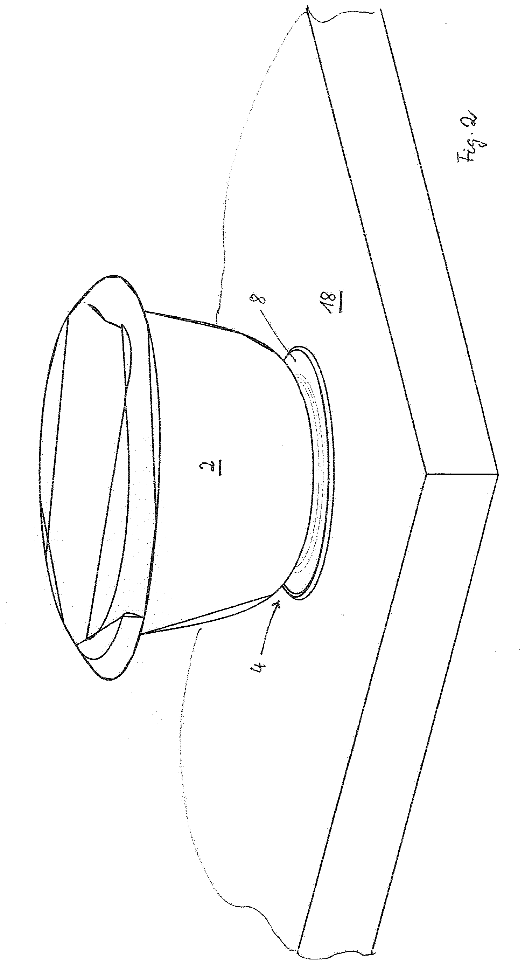

In der Fig. 2 ist die Rührschüssel 2 gezeigt, wie sie auf einer Aufstellfläche 18 aufgesetzt ist. Im Ausführungsbeispiel ist die Rührschüssel 2 so weit gegen die bewegliche Lippe 8 herunter gedrückt worden, dass sich diese mit ihrem äußeren Rand in einer nahezu waagerechten Lage befindet. Um die Rührschüssel 2 so weit absenken zu können, musste bei der Absenkbewegung Luft, die sich im Hohlraum 20 unterhalb der Unterseite 12 der Rührschüssel 2 und des Dichtrings 4 befand, nach außen austreten. Bei einer Rückfederbewegung der Rührschüssel 2, die von der beweglichen Lippe 8 und den darin bei der Absenkbewegung entstandenen Rückstellkräften induziert worden ist, bildet sich im Hohlraum 20 ein Unterdruck, durch den die Rührschüssel 2 über den Dichtring 4 auf die Aufstellfläche 18 angepresst gehalten ist.

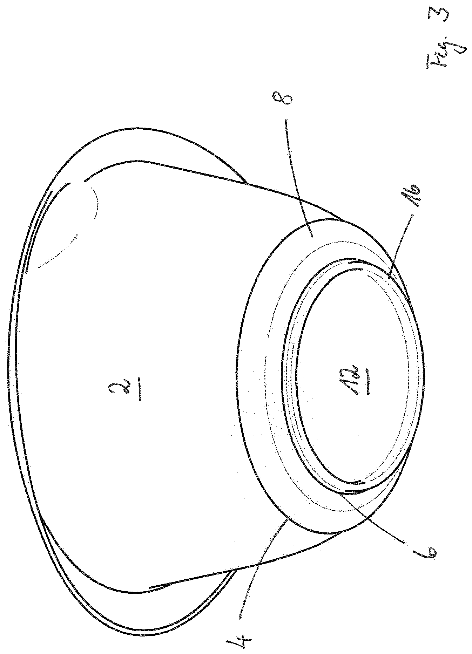

In Fig. 3 ist eine Ansicht auf die Rührschüssel 2 gezeigt, bei der sich der Dichtring 4 in einer Nichtgebrauchsstellung befindet. Der Dichtring 4 ist im Ausführungsbeispiel kragenartig nach oben geschlagen und liegt plan auf der Oberfläche der benachbarten Wandung der Rührschüssel 2 an. Wenn sich der Dichtring 4 wie in Fig. 3 gezeigt in seiner Nichtgebrauchsstellung befindet, so kann die Rührschüssel 2 problemlos mit dem Stützelement 16 auf einer Aufstellfläche 18 aufgestellt werden.

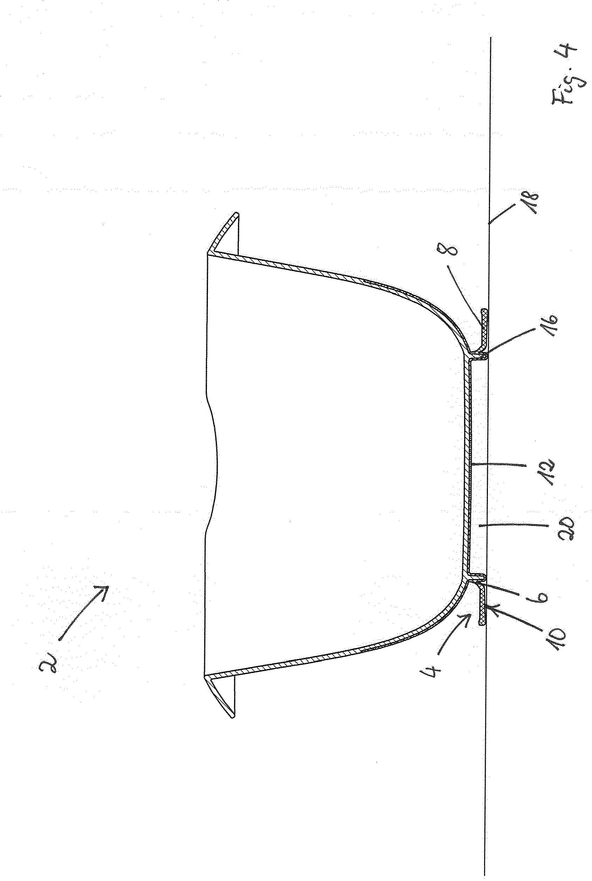

In Fig. 4 ist eine Schnittansicht durch die Rührschüssel mit dem Dichtring in Gebrauchsstellung gezeigt. Die bewegliche Lippe 8 des Dichtring 4 liegt mit der Aufstandsfläche 10 auf der darunter befindlichen Aufstellfläche 18 auf. Die Rührschüssel 12 ist so weit nach unten abgesenkt, dass auch das Stützelement 16 mit der Aufstellfläche 18 Kontakt hat. Zwischen der Oberfläche der Aufstellfläche 18 und der Unterseite 12 der Rührschüssel befindet sich der Hohlraum 20, der seitlich von dem ringförmigen Stützelement 16 und der beweglichen Lippe 8 nach außen hin gegen einströmende Außenluft abgedichtet ist.

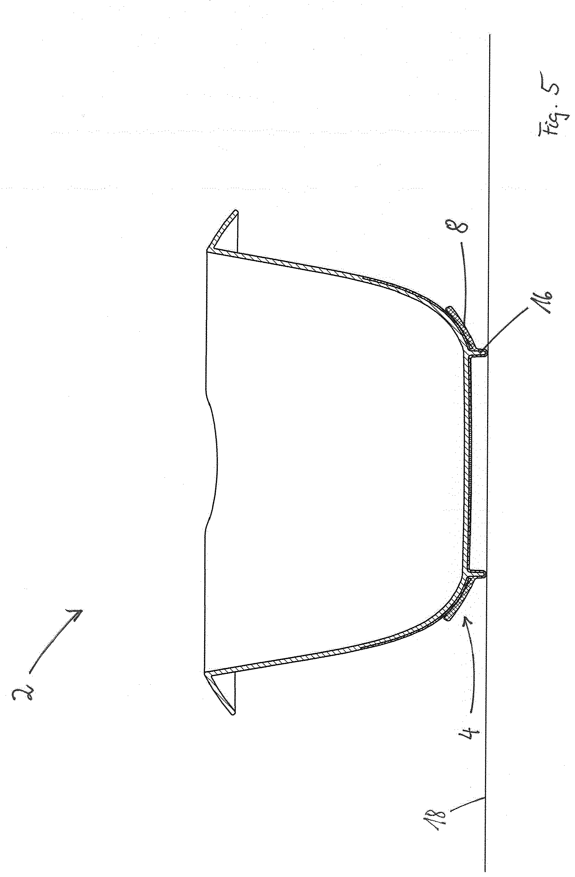

In Fig. 5 ist die in Fig. 4 gezeigte Rührschüssel in einer Schnittdarstellung gezeigt, bei der sich der Dichtring 4 in der Nichtgebrauchsstellung befindet. Aus der Schnittansicht ist erkennbar, dass sich die bewegliche Lippe 8 des Dichtrings 4 an die Außenkontur der Seitenwand der Rührschüssel 2 angelegt hat. Nach unten hin ist die Rührschüssel 2 dann nur über das Stützelement 16 auf der Aufstellfläche 18 abgestützt.

Das vorstehend beschriebene Ausführungsbeispiel dient nur der Erläuterung der Erfindung. Die Erfindung ist nicht auf das Ausführungsbeispiel beschränkt. Dem Fachmann bereitet es keine Schwierigkeiten, das Ausführungsbeispiel auf eine ihm als geeignet erscheinende Weise abzuändern, um es an einen konkreten Anwendungsfall anzupassen.

## Patentansprüche

1. Rührschüssel (2) aus einem Kunststoffmaterial mit einem bodenseitig mit der Rührschüssel (2) verbundenen Aufstellkörper aus einem elastischen Material, der eine Aufstandsfläche ausbildet und der als umlaufender Dichtring (4) ausgebildet ist, dessen in radialer Richtung nach innen weisender Randbereich (6) mit der Unterseite der Rührschüssel (2) luftdicht schließend verbunden ist, wobei sich von dem nach innen weisenden Randbereich (6) aus eine belastungsabhängig zwischen verschiedenen Stellungen bewegliche Lippe (8) zumindest teilweise in radialer Richtung nach außen erstreckt, die Unterseite der beweglichen Lippe (8) abschnittsweise eine Aufstandsfläche (10) bildet, mit der die Rührschüssel (2) in zumindest einer Stellung der beweglichen Lippe (8) auf einer Aufstellfläche (18) aufsteht, und der Dichtring (4) zusammen mit der Unterseite (12) der Rührschüssel (2) einen Saugnapf bildet, der einen je nach Stellung der beweglichen Lippe (8) unterschiedlich großen Hohlraum (20) umgrenzt, **dadurch gekennzeichnet, dass** der Dichtring (4) aus einer Gebrauchsstellung in eine Nichtgebrauchsstellung verlagerbar ist und der Dichtring (4) in der Nichtgebrauchsstellung an der nach außen weisenden Oberfläche der Rührschüssel (2) flächig anliegt.

2. Rührschüssel (2) nach Anspruch 1, **dadurch gekennzeichnet, dass** die bewegliche Lippe (8) am äußeren Rand der Unterseite (12) mit der Rührschüssel (2) verbunden ist.

3. Rührschüssel (2) nach Anspruch 1 oder 2, **dadurch gekennzeichnet, dass** die bewegliche Lippe (8) als Flachdichtring ausgebildet ist.

4. Rührschüssel (2) nach einem der vorhergehenden Ansprüche, **dadurch gekennzeichnet, dass** an die bewegliche Lippe (8) eine Zuglasche (14) angeformt ist.

5. Rührschüssel (2) nach einem der vorhergehenden Ansprüche, **dadurch gekennzeichnet, dass** an der Unterseite (12) der Rührschüssel (2) ein Stützelement (16) ausgebildet ist, das eine maximale Absenkhöhe der Rührschüssel (2) im Verhältnis zur beweglichen Lippe (8) definiert.

## Claims

1. Mixing bowl (2) made of a plastics material, comprising a supporting member connected to the bottom of the mixing bowl (2), which member is made of a resilient material, forms a standing surface and is designed as a circumferential sealing ring (4) of which the radially inwardly facing edge region (6) is connected to the bottom face of the mixing bowl (2) in an airtight manner, a lip (8), which can be moved between different positions on the basis of a load, extending at least in part radially outwards from the inwardly facing edge region (6), the bottom face of the movable lip (8) forming, in portions, a standing surface (10) by means of which the mixing bowl (2) stands on a supporting surface (18) in at least one position of the movable lip (8), and the sealing ring (4) together with the bottom face (12) of the mixing bowl (2) forming a suction cup which delimits a hollow space (20) of a size which varies depending on the position of the movable lip (8), **characterised in that** the sealing ring (4) can be moved from a use position into a non-use position and the sealing ring (4) is flush with the outwardly facing surface of the mixing bowl (2) in the non-use position.

2. Mixing bowl (2) according to claim 1, **characterised in that** the movable lip (8) is connected to the mixing bowl (2) at the outer edge of the bottom face (12).

3. Mixing bowl (2) according to either claim 1 or claim 2, **characterised in that** the movable lip (8) is designed as a flat sealing ring.

4. Mixing bowl (2) according to any of the preceding claims, **characterised in that** a pull tab (14) is integrally formed on the movable lip (8).

5. Mixing bowl (2) according to any of the preceding claims, **characterised in that**, on the bottom face (12) of the mixing bowl (2), a support element (16) is formed which defines a maximum lowering height of the mixing bowl (2) relative to the movable lip (8).

## Revendications

1. Bol mélangeur (2) en un matériau plastique avec un corps de mise en place raccordé côté fond au bol mélangeur (2) en un matériau élastique qui réalise une surface support et qui est réalisé en tant qu'anneau étanche tournant (4), dont la zone de bord (6) tournée dans le sens radial vers l'intérieur est raccordée en fermant de manière étanche à l'air au côté inférieur du bol mélangeur (2), dans laquelle une lèvre mobile (8) selon la sollicitation entre différentes positions s'étend au moins partiellement dans le sens radial vers l'extérieur depuis la zone de bord (6) tournée vers l'intérieur, le côté inférieur de la lèvre mobile (8) forme par sections une surface support (10), avec laquelle le bol mélangeur (2) se lève dans au moins une position de la lèvre mobile (8) sur une surface de mise en place (18), et l'anneau étanche (4) forme conjointement avec le côté inférieur (12) du bol mélangeur (2) une ventouse qui délimite une cavité (20) de taille différente selon la position de la lèvre mobile (8), **caractérisée en ce que** l'anneau étanche (4) peut être déplacé d'une position d'utilisation dans une position de non-utilisation et l'anneau étanche (4) repose à plat dans la position de non-utilisation contre la surface tournée vers l'extérieur du bol mélangeur (2).

2. Bol mélangeur (2) selon la revendication 1, **caractérisé en ce que** la lèvre mobile (8) est raccordée au bol mélangeur (2) au niveau du bord extérieur du côté inférieur (12).

3. Bol mélangeur (2) selon la revendication 1 ou 2, **caractérisé en ce que** la lèvre mobile (8) est réalisée en tant qu'anneau étanche plat.

4. Bol mélangeur (2) selon l'une quelconque des revendications précédentes, **caractérisé en ce qu'**une languette à tirer (14) est formée au niveau de la lèvre mobile (8).

5. Bol mélangeur (2) selon l'une quelconque des revendications précédentes, **caractérisé en ce qu'**un élément d'appui (16) est réalisé sur le côté inférieur (12) du bol mélangeur (2), lequel définit une hauteur d'abaissement maximale du bol mélangeur (2) par rapport à la lèvre mobile (8).
